# EUROPEAN PATENT SPECIFICATION

(11) **EP 4 009 127 B1**
(45) Date of publication and mention of the grant of the patent: **25.01.2023**
(21) Application number: 20212220.6
(22) Date of filing: 07.12.2020
(51) Int. Cl.: B64F 5/60, G05B 23/02, B64C 39/02

(54) **DIAGNOSTICS SYSTEM FOR DIAGNOSING THE CONDITION OF EQUIPMENT**
DIAGNOSESYSTEM ZUR DIAGNOSE DES ZUSTANDS VON GERÄTEN
SYSTÈME DE DIAGNOSTIC DE L'ÉTAT D'ÉQUIPEMENT

(43) Date of publication of application: 08.06.2022
(73) Proprietor: Hitachi, Ltd., Tokyo 100-8280 (JP)
(72) Inventor: YAMASHITA, Tomoaki, London EC2Y (GB); KATOH, Tetsuji, London EC2Y (GB); ELLIS, Robert, London EC2Y (GB)
(74) Representative: Mewburn Ellis LLP

(56) References cited:
- US-A1- 2019 066 488
- US-A1- 2020 089 206

## Description

### Field of the Invention

The present invention relates to a diagnostics system for diagnosing the condition of target equipment.

### Background

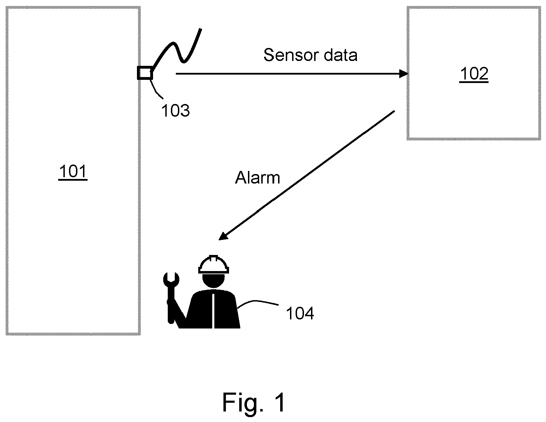

Figure 1 shows schematically a conventional diagnostics system 102 for use in maintenance and repair of target equipment 101. The target equipment has one or more sensors 103 that sense various measurable parameters of the equipment, the sensor data being transmitted to the diagnostics system. The data is used by the system to determine whether the condition of the equipment has deteriorated such that it requires maintenance or repair. For example, the data can be compared with look up tables or applied to analytical or learnt models of the target equipment. If the determination is positive, the system issues a request, e.g. in the form of an alarm, to call out a maintenance engineer 104 to visit the target equipment and perform appropriate maintenance or repair action.

Such an approach to diagnosis and maintenance or repair is used in many industries, such as railways, construction, automotive, energy production and supply, buildings and plant, water etc.

However, the cost of implementing this approach, especially the human cost, can be high. In particular, to avoid equipment breakdowns caused by inadequate or ambiguous sensor data, it may be necessary to overcompensate by setting up the system to call out a maintenance engineer even when maintenance or repair eventually proves unnecessary, i.e. to accept a large number of "false positives". Also false positive alarms may be caused by external/environmental factors temporarily affecting the performance of the sensors, or the transmission of the sensor data.

US 2019 066488 A1 proposes the use of an autonomous mobile unmanned machine to verify an alarm condition existing within a facility and US 2020 089206 A1 proposes a system for monitoring and maintaining luminaires using an Unmanned Aerial Vehicle (UAV).

The present invention has been devised in light of the above considerations.

### Summary of the Invention

In a first aspect, the present invention provides a computer-based diagnostics system according to claim 1.

By dispatch of the mobile robot investigator and using the additional data obtained thereby to make a further evaluation of the condition of the target equipment, it is possible to better discriminate between false positives and those circumstances when a human engineer is needed to perform maintenance or repair. In this way, better use can be made of human resources and costs can be reduced.

The target equipment can be, for example, any equipment in the aforementioned industries. The system is of particular benefit in situations where there are spatially distributed pieces of target equipment which are time-consuming for an engineer to visit. It also has advantages in situations where the target equipment is in potentially dangerous locations, such that unnecessary visits by humans should be reduced. In the context of railways, the target equipment can be railway infrastructure, such as sets of points, overhead lines, and/or track circuits. In particular, sets of points are abundant on railway networks, and can be both widely spatially distributed and potentially dangerous to visit in person.

The first diagnostics sub-system is configured to receive a location signal providing the location of an engineer, and wherein the first diagnostics sub-system issues the request to dispatch the mobile robot investigator when the location of the engineer is further than a predetermined distance away from the target equipment, but otherwise issues a request to the engineer to make an investigation of the target equipment. The time delay for performance of the maintenance or repair can thus be shortened.

The additional data may be photographic or video image data.

The second diagnostics sub-system may be further configured to share its further evaluation of the condition of the target equipment with the first diagnostics sub-system. The first diagnostics sub-system can then use the further evaluation to improve its ability to make the preliminary evaluation. For example, the first diagnostics sub-system may make its preliminary evaluation on the basis of a comparison of the sensor data with entries in a look up table, or on the basis of a model of the target equipment. The result of the further evaluation can be used to update such a look up table or to better tune such a model.

In a second aspect, the present invention provides a combination of the diagnostics system of the first aspect and the mobile robot investigator.

The mobile robot investigator may be, for example, an unmanned aerial vehicle. Such a vehicle can be highly mobile, allowing it to easily approach the target equipment, even when the target equipment is in operation.

Conveniently, the mobile robot investigator may carry one or more cameras to obtain the additional data in the form of photographic or video data.

The one or more cameras may be located within an optical shielding structure which is place-able over the target equipment by the mobile robot investigator to regulate the ambient lighting of the target equipment. Additionally, the mobile robot investigator may carry one or more light sources within the optical shielding structure to provide standardised lighting of the target equipment within the optical shielding structure. In this way, standardised and repeatable lighting conditions can be achieved, and as a consequence standardised images obtained which are more comparable against stored images.

The mobile robot investigator may include means to impose a predetermined distance of the one or more cameras from the target equipment.

The mobile robot investigator may include a code reader which is configured to read a code mounted to the target equipment. The code can provide the robot investigator with the identity of the target equipment. Additionally or alternatively, it can provide the robot investigator with information which the robot investigator can apply to its investigation, e.g. to help it produce standardised and repeatable images.

In a third aspect, the present invention provides the use of the combination of the second aspect for performing maintenance or repair of target equipment equipped with sensors for obtaining sensor data suitable for evaluating the condition of the target equipment.

For example, a method of performing maintenance or repair of target equipment equipped with sensors for obtaining sensor data suitable for evaluating the condition of the target equipment includes:
providing the combination of the second aspect;
using the first diagnostics sub-system to: receive sensor data from the sensors of the target equipment, make a preliminary evaluation of the condition of the target equipment on the basis of the sensor data, and, when the preliminary evaluation of the condition is indicative of a need for maintenance or repair of the target equipment, dispatch the mobile robot investigator to the target equipment in order for the mobile robot investigator to make an investigation of the target equipment;
obtaining additional data by the mobile robot investigator during its investigation of the target equipment;
using the second diagnostics sub-system to: receive from the mobile robot investigator the additional data, make a further evaluation of the condition of the target equipment on the basis of the additional data, and, when the further evaluation of the condition is still indicative of a need for maintenance or repair of the target equipment, issue a request to dispatch an engineer to the target equipment in order to perform the maintenance or repair.

In a fourth aspect, the present invention provides a computer-based method according to claim 11.

Thus the method of the fourth aspect corresponds to the diagnostics system of the first aspect.

In a fifth aspect, the present invention provides a computer program comprising code which, when the code is executed on a computer, causes the computer to perform the method of the fourth aspect.

In a sixth aspect, the present invention provides a computer readable medium storing the computer program of the fifth aspect.

The invention includes the combination of the aspects and preferred features described except where such a combination is clearly impermissible or expressly avoided.

### Summary of the Figures

Embodiments and experiments illustrating the principles of the invention will now be discussed with reference to the accompanying figures in which:
**Figure 1** shows schematically a conventional diagnostics system for use in maintenance and repair of target equipment;
**Figure 2** shows schematically a diagnostics system according to the present disclosure for use in maintenance and repair of target equipment;
**Figure 3** shows schematically a detail of the first diagnostics sub-system;
**Figure 4** shows schematically a wheeled robot investigator;
**Figure 5** shows schematically a variant of the wheeled robot investigator;
**Figure 6** shows schematically a drone robot investigator;
**Figure 7** shows schematically a variant of the drone robot investigator;
**Figure 8** shows schematically the drone mobile robot investigator being used to investigate a set of railway of points; and
**Figure 9** shows schematically a further variant of the drone robot investigator.

### Detailed Description of the Invention

Aspects and embodiments of the present invention will now be discussed with reference to the accompanying figures. Further aspects and embodiments will be apparent to those skilled in the art.

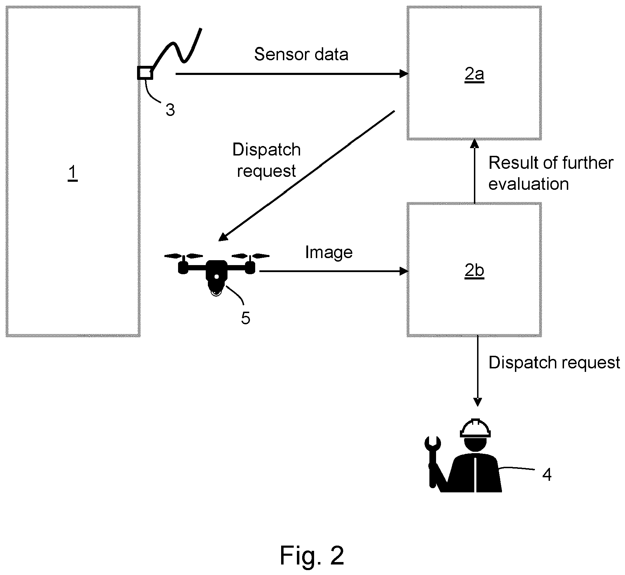

Figure 2 shows schematically a diagnostics system according to the present disclosure for use in maintenance and repair of target equipment 1. The diagnostics system includes a first diagnostics subsystem 2a, and a second diagnostics sub-system 2b. The target equipment is itself equipped with one or more sensors 3 which measure condition parameters associated with the target equipment. These measurements are relayed to the first diagnostics sub-system as sensor data.

Based on the received sensor data, the first diagnostics sub-system 2a makes a preliminary evaluation of the condition of the target equipment 1. In particular, it determines if the condition has exceeded a threshold indicative of a need for maintenance or repair of the target equipment. The threshold may be a simple alert level (e.g. stored in a look up table of the first diagnostics sub-system) associated with one or more of the sensor measurements, or it may be a more sophisticated analysis based for example on a model of the target equipment stored in or interrogatable by the first diagnostics sub-system.

When the preliminary evaluation of the condition is indicative of a need for maintenance or repair of the target equipment, the first diagnostics sub-system 2a then issues a request to dispatch a mobile robot investigator 5 to the target equipment in order for the robot investigator to make an investigation of the target equipment. The robot investigator may conveniently be, as shown in Figure 2, an unmanned aerial vehicle (or "drone") equipped, for example with one or more cameras for obtaining photographic or video image data. However, this does not exclude that the robot investigator could be of different type, such as a wheeled or tracked vehicle, and/or that the robot investigator can obtain other types of data rather than image data.

The drone 5 approaches the target equipment 1, and using its one or more cameras obtains additional data from the target equipment in the form of image data of the target equipment, and relays this back to the second diagnostics sub-system 2b which then performs a further evaluation of the condition of the target equipment on the basis of the additional data. For example, the second diagnostics sub-system can perform an image analysis in which a comparison is made between the image(s) of the additional data, and stored images of the target equipment in healthy and/or deteriorated conditions. On the basis of that comparison, the second diagnostics sub-system can validate or invalidate the preliminary evaluation, i.e. determine whether the condition target equipment is still indicative of a need for maintenance or repair of the target equipment.

In the case of validation, a dispatch request is sent to an engineer to go to the target equipment 1 to perform the maintenance or repair. Whether the result of the further evaluation is validation or invalidation, the result can be shared with the first diagnostics sub-system 2a, which can then advantageously use that result e.g. to improve its model of the target equipment and thereby improve the accuracy of the first diagnostics sub-system.

A further benefit of the system is that it can reduce the incidence of false positives, and thereby make better use can be made of human resources. In this way labour costs can be reduced.

The system is particularly advantageous to implement when plural items of target equipment that may need maintenance or repair are spatially distributed so that they are time-consuming to visit and/or are in potentially dangerous locations.

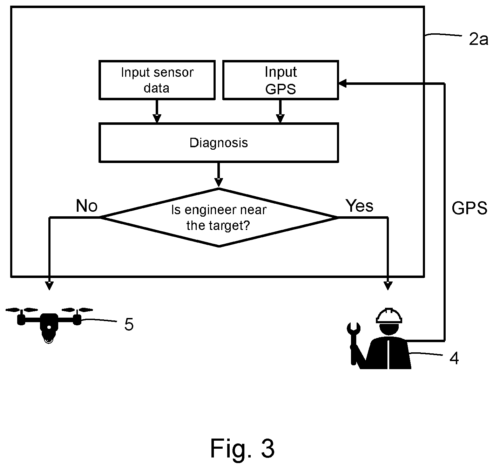

Figure 3 shows schematically a detail of the first diagnostics sub-system 2a. The engineer 5 carries a location device, such as a GPS sensor, which informs the first diagnostics sub-system of the location of the engineer. When the first diagnostics sub-system determines that engineer's location is within a predetermined distance from the target equipment, the sub-system can again issue a dispatch request directly to the engineer 4 rather than to the drone 5. In this way, the time delay for performance of the maintenance or repair can be shortened.

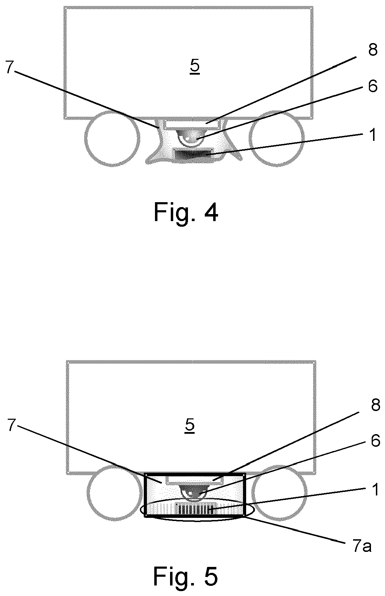

As mentioned above, the mobile robot investigator 5 equipped with one or more cameras for obtaining photographic or video image data. Figure 4 shows schematically a wheeled version of the robot investigator having a camera 6. In addition, however, the robot investigator has an optical shielding structure 7 in the form of a blackout curtain which surrounds the camera and a light source 8 also located inside the blackout curtain. The blackout curtain and light source improve the visual inspection accuracy by enabling the camera to take its images under standardised and repeatable lighting conditions, which are then more comparable against stored images. In this way, effects of external factors which may influence image quality (brightness, precipitation, obstacles etc.) can be reduced or eliminated.

In Figure 4, the optical shielding structure 7 is in the form of a flexible blackout curtain which allows the mobile robot investigator 5 to move unhindered over the target equipment 1. However, other shielding structures can be adopted. For example, Figure 5 shows schematically a variant of the wheeled robot investigator in which the shielding structure 7 is formed as a rigid-walled box having an open bottom and flexible fringes 7a around the bottom edges of the wall to allow the robot investigator to similarly move unhindered over the target equipment.

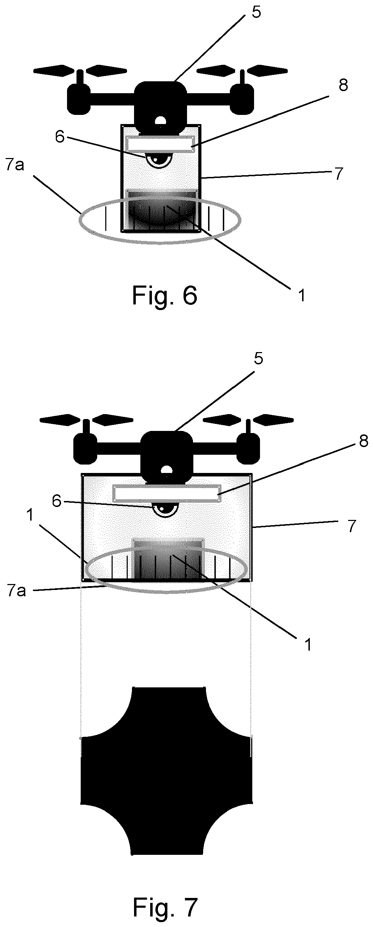

Figure 6 shows schematically a drone form of the mobile robot investigator 5. Like the wheeled robot investigator of Figure 5, it has a camera 6, a box-like optical shielding structure 7 with a flexible base structure 7a, and a light source 8. An advantage of the drone robot investigator is its high mobility, allowing it to easily approach and leave the target equipment, facilitating image capture even if the target equipment is in operation. Figure 7 shows schematically at top a variant of the drone robot investigator having a larger diameter shielding structure 7, and at bottom the cross-sectional footprint of the shielding structure, which is configured to provide clear spaces beneath the drone's propellers in order to avoid interference with the propellers' downdraughts.

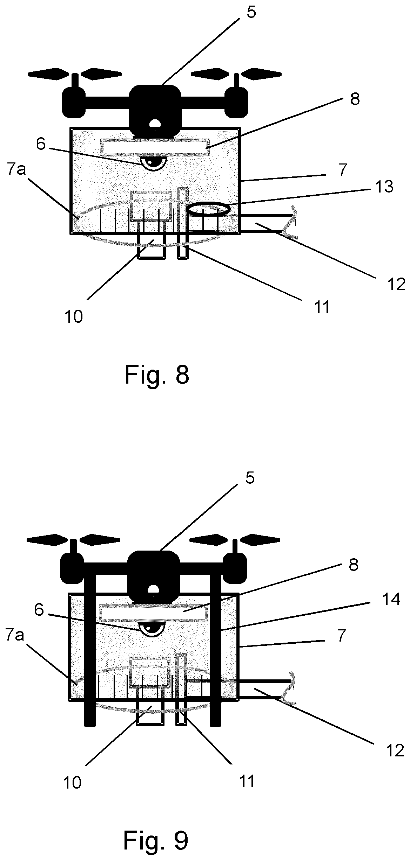

Figure 8 shows schematically the drone mobile robot investigator 5 being used to investigate an item of target equipment which is a set of railway of points (also known as a railroad switch). Each set of points has a pair of static stock rails 10 and a pair of movable tongue rails 11. An operating rod 12 joins the tongue rails and moves them in tandem towards or away from their respective stock rails to change the points. The points are used for changing the tracks of rolling stock, and as such are safety critical items of equipment. Many points are deployed across a railway network, and the maintenance cost of keeping points in good working condition is high. In addition, manual inspection of points by an engineer can be dangerous due to the operation of tolling stock on the network. Thus it can be particularly advantageous to use the diagnostics system described above to reduce the number of manual points inspections. The drone can be positioned, as shown in Figure 8, over a stock rail / tongue rail pair in order to evaluate the condition of that pair and the operating rod.

Optionally, as shown in Figure 8, the mobile robot investigator 5 may include a code reader (e.g. integrated with the camera 6) which is configured to read an identifying code 13, such as a QR code, mounted to the target equipment, and thereby identify the target equipment to the mobile robot investigator. The additional data obtained by the robot investigator can also be associated with the identification information when transmitted to the second diagnostics sub-system 2b, thereby helping the sub-system to organise the data. Additionally or alternatively, the code can provide the robot investigator with information, such as a stand-off information, which the robot investigator can apply to its investigation, e.g. to help it produce standardised and repeatable images.

Figure 9 shows a further variant of the drone mobile robot investigator 5 in which the drone has depending measuring rods 14 which can be docked to the target equipment to ensure a correct stand-off of the camera 6 from the equipment.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise.

## Claims

1. A computer-based diagnostics system for diagnosing the condition of target equipment (1), the diagnostics system including:
a first diagnostics sub-system (2a) that is configured to: receive sensor data from sensors (3) of the target equipment (1), make a preliminary evaluation of the condition of the target equipment on the basis of the sensor data, and, when the preliminary evaluation of the condition is indicative of a need for maintenance or repair of the target equipment, issue a request to dispatch a mobile robot investigator (5) to the target equipment in order for the mobile robot investigator to make an investigation of the target equipment; and
a second diagnostics sub-system (2b) that is configured to: receive from the mobile robot investigator (5) additional data obtained by the mobile robot investigator during its investigation of the target equipment (1), make a further evaluation of the condition of the target equipment on the basis of the additional data, and, when the further evaluation of the condition is still indicative of a need for maintenance or repair of the target equipment, issue a request to dispatch an engineer (4) to the target equipment in order to perform the maintenance or repair;
**characterized in that**: the first diagnostics sub-system (2a) is further configured to receive a location signal providing the location of the engineer (4), and wherein the first diagnostics sub-system issues the request to dispatch the mobile robot investigator (5) when the location of the engineer is further than a predetermined distance away from the target equipment (1), but otherwise issues a request to the engineer to make an investigation of the target equipment.

2. The diagnostics system according to claim 1, wherein the additional data is photographic or video image data.

3. A combination of the diagnostics system of claim 1 or 2 and the mobile robot investigator (5).

4. The combination of claim 3, wherein the mobile robot investigator (5) is an unmanned aerial vehicle.

5. The combination of claim 3 or 4, wherein the mobile robot investigator (5) carries one or more cameras (6) to obtain the additional data in the form of photographic or video data.

6. The combination of claim 5, wherein the one or more cameras (6) are located within an optical shielding structure (7) which is place-able over the target equipment by the mobile robot investigator (5) to regulate the ambient lighting of the target equipment (1).

7. The combination of claim 6, wherein the mobile robot investigator (5) carries one or more light sources (8) within the optical shielding structure (7) to provide standardised lighting of the target equipment (1) within the optical shielding structure.

8. The combination of any one of claims 5 to 7, wherein the mobile robot investigator (5) includes means to impose a predetermined distance of the one or more cameras (6) from the target equipment (1).

9. The combination of any one of claims 3 to 8, wherein the mobile robot investigator (5) includes a code reader which is configured to read a code (13) mounted to the target equipment (1).

10. Use of the combination of any one of claims 3 to 9 for performing maintenance or repair of target equipment (1) equipped with sensors for obtaining sensor data suitable for evaluating the condition of the target equipment.

11. A computer-based method of performing maintenance or repair of target equipment (1) equipped with sensors (3) for obtaining sensor data suitable for evaluating the condition of the target equipment, the method including:
receiving sensor data from sensors (3) of the target equipment (1);
receiving a location signal providing the location of an engineer (4)
making a preliminary evaluation of the condition of the target equipment (1) on the basis of the sensor data;
when the preliminary evaluation of the condition is indicative of a need for maintenance or repair of the target equipment (1), and when the location of the engineer (4) is further than a predetermined distance away from the target equipment (1), dispatching a mobile robot investigator (5) to the target equipment in order for the mobile robot investigator to make an investigation of the target equipment;
receiving from the mobile robot investigator (5) additional data obtained by the mobile robot investigator (4) during its investigation of the target equipment (1);
making a further evaluation of the condition of the target equipment (1) on the basis of the additional data; and
when the further evaluation of the condition is still indicative of a need for maintenance or repair of the target equipment (1), issuing a request to dispatch an engineer (5) to the target equipment in order to perform the maintenance or repair.

12. A computer readable medium storing a computer program comprising code which, when the code is executed on a computer, causes the computer to perform the method of claim 11.

13. A computer program comprising code which, when the code is executed on a computer, causes the computer to perform the method of claim 11.

## Patentansprüche

1. Computerbasiertes Diagnosesystem zur Diagnose des Zustands einer Zieleinrichtung (1), wobei das Diagnosesystem Folgendes umfasst:
ein erstes Diagnose-Subsystem (2a), das ausgelegt ist, um: Sensordaten von Sensoren (3) der Zieleinrichtung (1) zu empfangen, eine Vorabbewertung des Zustands der Zieleinrichtung auf Basis der Sensordaten vorzunehmen und, wenn die Vorabbewertung des Zustands die Notwendigkeit einer Wartung oder Reparatur der Zieleinrichtung angibt, eine Anfrage zur Entsendung eines mobilen Prüfroboters (5) an die Zieleinrichtung auszugeben, damit der mobile Prüfroboter eine Prüfung der Zieleinrichtung vornehmen kann; und
ein zweites Diagnose-Subsystem (2b), das ausgelegt ist, um: zusätzliche Daten von dem mobilen Prüfroboter (5) zu empfangen, die von dem mobilen Prüfroboter während dessen Prüfung der Zieleinrichtung (1) erhalten wurden, eine weitere Bewertung des Zustands der Zieleinrichtung auf Basis der zusätzlichen Daten vorzunehmen und, wenn die weitere Bewertung des Zustands noch immer die Notwendigkeit einer Wartung oder Reparatur der Zieleinrichtung angibt, eine Anfrage zur Entsendung eines Technikers (4) an die Zieleinrichtung auszugeben, um die Wartung oder die Reparatur durchzuführen;
**dadurch gekennzeichnet, dass**: das erste Diagnose-Subsystem (2a) außerdem ausgelegt ist, um ein Standortsignal zu empfangen, das den Standort des Technikers (4) bereitstellt, und wobei das erste Diagnose-Subsystem die Anfrage zur Entsendung des mobilen Prüfroboters (5) ausgibt, wenn der Standort des Technikers weiter als eine vorbestimmte Distanz von der Zieleinrichtung (1) entfernt ist, aber ansonsten eine Anfrage an den Techniker zur Prüfung der Zieleinrichtung ausgibt.

2. Diagnosesystem nach Anspruch 1, wobei die zusätzlichen Daten Foto- oder Videobilddaten sind.

3. Kombination eines Diagnosesystems nach Anspruch 1 oder 2 und des mobilen Prüfroboters (5).

4. Kombination nach Anspruch 3, wobei der mobile Prüfroboter (5) ein unbemanntes Fluggerät ist.

5. Kombination nach Anspruch 3 oder 4, wobei der mobile Prüfroboter (5) eine oder mehrere Kameras (6) aufweist, um die zusätzlichen Daten in Form von Foto- oder Videodaten zu erhalten.

6. Kombination nach Anspruch 5, wobei sich die eine oder mehreren Kameras (6) innerhalb einer optischen Abschirmstruktur (7) befinden, die von dem mobilen Prüfroboter (5) über der Zieleinrichtung platziert werden kann, um die Umgebungsbeleuchtung der Zieleinrichtung (1) zu regulieren.

7. Kombination nach Anspruch 6, wobei der mobile Prüfroboter (5) eine oder mehrere Lichtquellen (8) innerhalb der optischen Abschirmstruktur (7) aufweist, um eine standardisierte Beleuchtung der Zieleinrichtung (1) innerhalb der optischen Abschirmstruktur bereitzustellen.

8. Kombination nach einem der Ansprüche 5 bis 7, wobei der mobile Prüfroboter (5) Mittel umfasst, um eine vorbestimmte Distanz der einen oder mehreren Kameras (6) von der Zieleinrichtung (1) bereitzustellen.

9. Kombination nach einem der Ansprüche 3 bis 8, wobei der mobile Prüfroboter (5) einen Code-Leser umfasst, der ausgelegt ist, um einen auf der Zieleinrichtung (1) angebrachten Code (13) zu lesen.

10. Verwendung einer Kombination nach einem der Ansprüche 3 bis 9 zur Durchführung einer Wartung oder Reparatur einer Zieleinrichtung (1), die mit Sensoren ausgestattet ist, um Sensordaten zu erhalten, die zur Bewertung des Zustands der Zieleinrichtung geeignet sind.

11. Computerbasiertes Verfahren zur Durchführung einer Wartung oder Reparatur einer Zieleinrichtung (1), die mit Sensoren (3) ausgestattet ist, um Sensordaten zu erhalten, die zur Bewertung des Zustands der Zieleinrichtung geeignet sind, wobei das Verfahren Folgendes umfasst:
das Empfangen von Sensordaten von Sensoren (3) der Zieleinrichtung (1);
das Empfangen eines Standortsignals, das den Standort eines Technikers (4) bereitstellt;
das Vornehmen einer Vorabbewertung des Zustands der Zieleinrichtung (1) auf Basis der Sensordaten;
wenn die Vorabbewertung des Zustands die Notwendigkeit einer Wartung oder Reparatur der Zieleinrichtung (1) angibt und wenn der Standort des Technikers (4) weiter als eine vorbestimmte Distanz von der Zieleinrichtung (1) entfernt ist, das Entsenden eines mobilen Prüfroboters (5) an die Zieleinrichtung, damit der mobile Prüfroboter eine Prüfung der Zieleinrichtung vornehmen kann;
das Empfangen von zusätzlichen Daten von dem mobilen Prüfroboter (5), die von dem mobilen Prüfroboter (4) während dessen Prüfung der Zieleinrichtung (1) erhalten wurden;
das Vornehmen einer weiteren Bewertung des Zustands der Zieleinrichtung (1) auf Basis der zusätzlichen Daten; und
wenn die weitere Bewertung des Zustands noch immer die Notwendigkeit einer Wartung oder Reparatur der Zieleinrichtung (1) angibt, das Ausgeben einer Anfrage zur Entsendung eines Technikers (5) an die Zieleinrichtung, um die Wartung oder die Reparatur durchzuführen.

12. Computerlesbares Medium, auf dem ein Computerprogramm gespeichert ist, das Code umfasst, der, wenn der Code auf einem Computer ausgeführt wird, den Computer veranlasst, ein Verfahren nach Anspruch 11 durchzuführen.

13. Computerprogramm, das Code umfasst, der, wenn der Code auf einem Computer ausgeführt wird, den Computer veranlasst, ein Verfahren nach Anspruch 11 durchzuführen.

## Revendications

1. Système de diagnostic informatisé pour diagnostiquer l'état d'un équipement cible (1), le système de diagnostic comprenant :
un premier sous-système de diagnostic (2a) qui est configuré pour : recevoir des données de capteur provenant de capteurs (3) de l'équipement cible (1), effectuer une évaluation préliminaire de l'état de l'équipement cible sur la base des données de capteur, et, lorsque l'évaluation préliminaire de l'état indique un besoin d'entretien ou de réparation de l'équipement cible, émettre une demande de dépêcher un investigateur de robot mobile (5) à l'équipement cible afin que l'investigateur de robot mobile effectue une investigation de l'équipement cible ; et
un second sous-système de diagnostic (2b) qui est configuré pour : recevoir en provenance de l'investigateur de robot mobile (5) des données supplémentaires obtenues par l'investigateur de robot mobile pendant son investigation sur l'équipement cible (1), effectuer une évaluation ultérieure de l'état de l'équipement cible sur la base des données supplémentaires, et, lorsque l'évaluation ultérieure de l'état indique toujours un besoin d'entretien ou de réparation de l'équipement cible, émettre une demande d'envoi d'un technicien (4) vers l'équipement cible afin d'exécuter l'entretien ou la réparation ;
**caractérisé en ce que** : le premier sous-système de diagnostic (2a) est en outre configuré pour recevoir un signal de localisation fournissant la localisation du technicien (4), et dans lequel le premier sous-système de diagnostic émet la demande pour dépêcher l'investigateur de robot mobile (5) lorsque la localisation du technicien est plus loin qu'une distance prédéterminée par rapport l'équipement cible (1), mais émet sinon une demande au technicien pour effectuer une investigation de l'équipement cible.

2. Système de diagnostic selon la revendication 1, dans lequel les données supplémentaires sont des données d'image photographique ou vidéo.

3. Combinaison du système de diagnostic selon la revendication 1 ou 2 et de l'investigateur de robot mobile (5) .

4. Combinaison selon la revendication 3, dans laquelle l'investigateur de robot mobile (5) est un véhicule aérien sans pilote.

5. Combinaison selon la revendication 3 ou 4, dans laquelle l'investigateur de robot mobile (5) porte une ou plusieurs caméras (6) pour obtenir les données supplémentaires sous la forme de données photographiques ou vidéo.

6. Combinaison selon la revendication 5, dans laquelle les une ou plusieurs caméras (6) sont situées à l'intérieur d'une structure de blindage optique (7) qui peut être placée au-dessus de l'équipement cible par l'investigateur de robot mobile (5) pour réguler l'éclairage ambiant de l'équipement cible (1).

7. Combinaison selon la revendication 6, dans laquelle l'investigateur de robot mobile (5) porte une ou plusieurs sources de lumière (8) à l'intérieur de la structure de blindage optique (7) pour fournir un éclairage standardisé de l'équipement cible (1) à l'intérieur de la structure de blindage optique.

8. Combinaison selon l'une quelconque des revendications 5 à 7, dans laquelle l'investigateur de robot mobile (5) comprend des moyens pour imposer une distance prédéterminée des une ou plusieurs caméras (6) à partir de l'équipement cible (1).

9. Combinaison selon l'une quelconque des revendications 3 à 8, dans laquelle l'investigateur de robot mobile (5) comprend un lecteur de code qui est configuré pour lire un code (13) monté sur l'équipement cible (1).

10. Utilisation de la combinaison selon l'une quelconque des revendications 3 à 9 pour effectuer un entretien ou une réparation d'un équipement cible (1) équipé de capteurs pour obtenir des données de capteur appropriées pour évaluer l'état de l'équipement cible.

11. Procédé informatisé d'exécution d'entretien ou de réparation d'un équipement cible (1) équipé de capteurs (3) pour obtenir des données de capteur appropriées pour évaluer l'état de l'équipement cible, le procédé comprenant les étapes consistant à :
recevoir des données de capteur en provenance de capteurs (3) de l'équipement cible (1) ;
recevoir un signal de localisation fournissant la localisation d'un technicien (4)
effectuer une évaluation préliminaire de l'état de l'équipement cible (1) sur la base des données du capteur ;
lorsque l'évaluation préliminaire de l'état indique un besoin d'entretien ou de réparation de l'équipement cible (1), et lorsque la localisation du technicien (4) est plus éloignée qu'une distance prédéterminée de l'équipement cible (1), dépêcher un investigateur de robot mobile (5) vers l'équipement cible afin que l'investigateur de robot mobile effectue une investigation sur l'équipement cible ;
recevoir en provenance de l'investigateur de robot mobile (5) des données supplémentaires obtenues par l'investigateur de robot mobile (4) pendant son investigation de l'équipement cible (1) ; sur l'équipement cible (1) ;
effectuer une évaluation ultérieure de l'état de l'équipement cible (1) sur la base des données supplémentaires ; et
lorsque l'évaluation ultérieure de l'état indique toujours un besoin d'entretien ou de réparation de l'équipement cible (1), émettre une demande de dépêcher un technicien (5) vers l'équipement cible afin d'effectuer l'entretien ou la réparation.

12. Support lisible par ordinateur stockant un programme informatique comprenant un code qui, lorsque le code est exécuté sur un ordinateur, amène l'ordinateur à exécuter le procédé selon la revendication 11.

13. Programme informatique comprenant un code qui, lorsque le code est exécuté sur un ordinateur, amène l'ordinateur à exécuter le procédé selon la revendication 11.
